# EUROPEAN PATENT APPLICATION

(11) **EP 4 799 883 A1**
(43) Date of publication of application: **02.09.2026**
(21) Application number: 26159027.7
(22) Date of filing: 17.02.2026
(51) Int. Cl.: B60W 10/22, B60W 40/06

(54) **WHOOPS-ROAD DETERMINATION DEVICE AND VEHICLE CONTROL METHOD**

(30) Priority: 26.02.2025 US 202519064615
(71) Applicant: Astemo, Ltd., Tokyo 100-0004 (JP)
(72) Inventor: KRUSE, Benjamin, Sunbury, 43074 (US); SADIE, Michael, Sunbury, 43074 (US)
(74) Representative: v. Bezold & Partner Patentanwälte - PartG mbB

(57) **Abstract**

A whoops-road determination device according to the invention 100' includes an acquisition unit 161 configured to acquire a first value corresponding to pitch information related to pitch motion in a vehicle 1 based on an output signal from a sensor 202, 204, 208 mounted on the vehicle, a calculation unit 163 configured to calculate a second value serving as a basis for determination whether a traveling road R of the vehicle 1 is a whoops-road from a time at which the first value crosses a first threshold, an accumulation unit 165 configured to accumulate the second value as an accumulation value with passage of time, and a determination unit 169 configured to determine whether the traveling road R is the whoops-road based on the accumulation value. The invention further relates to a corresponding vehicle control method.

## Description

### BACKGROUND OF THE INVENTION

The present invention relates to a whoops-road determination device and a vehicle control method.

For a vehicle such as an automobile, a configuration for determining whether a traveling road of the vehicle corresponds to a predetermined determination target road has been proposed considering the road ability of the vehicle and the like in recent years.

Under such a circumstance, Japanese Patent Application Laid-open No. 2010-215150 relates a bumpy road detection device 10 and discloses the device 10 as including an accelerometer 14 that detects an acceleration of an unsprung component of a vehicle every predetermined sampling period, a vehicle speed sensor 16 that detects a vehicle speed, and a control device 12 that accumulates a variation of the acceleration detected by the accelerometer, calculates a difference of the accumulation result of the variation for each sampling period, and determines that a traveling road of a vehicle is a bumpy road when the result of the difference calculation indicates that an acceleration equal to or larger than a predetermined acceleration continues for a predetermined time period or longer and the vehicle speed detected by the vehicle speed sensor 16 is a predetermined vehicle speed or higher.

### SUMMARY OF THE INVENTION

However, according to the studies made by the present inventor, in the configuration disclosed in Japanese Patent Application Laid-open No. 2010-215150, the traveling road of the vehicle is determined as being a bumpy road when the calculation result obtained by calculating a difference of the accumulation result for each sampling period, the accumulation result being obtained by accumulating a variation of the acceleration detected by the accelerometer indicates that an acceleration equal to or larger than a predetermined acceleration continues for a predetermined time period or longer and the vehicle speed detected by the vehicle speed sensor 16 is a predetermined vehicle speed or higher. Therefore, it is expected that there is a tendency that accurate determination whether the traveling road of the vehicle is a bumpy road is difficult because the acceleration of the unsprung component of the vehicle always varies when the vehicle travels on a rough road such as a so-called "off-road". Accordingly, there is room for improvement in terms of this point. Such a circumstance is the same in a case where a determination target road is an undulating road with larger bumps and dips than the bumpy road, i.e., a so-called "whoops-road".

The present invention has been achieved through the above studies, and an object of the present invention is to provide a whoops-road determination device that can appropriately determine whether a traveling road on which a vehicle travels is a whoops-road even when the vehicle travels on a rough road such as a so-called "off-road", and a vehicle control method that can control the vehicle.

In order to achieve the above object, one aspect of the present invention provides a whoops-road determination device comprising: an acquisition unit configured to acquire a first value corresponding to pitch information related to pitch motion in a vehicle based on an output signal from a sensor mounted on the vehicle; a calculation unit configured to calculate a second value serving as a basis for determination whether a traveling road of the vehicle is a whoops-road from a time at which the first value crosses a first threshold; an accumulation unit configured to accumulate the second value as an accumulation value with passage of time; and a determination unit configured to determine whether the traveling road is the whoops-road based on the accumulation value.

Another aspect of the present invention provides a vehicle control method comprising: an acquisition step of acquiring a first value corresponding to pitch information related to pitch motion in a vehicle based on an output signal from a sensor mounted on the vehicle; a calculation step of calculating a second value serving as a basis for determination whether a traveling road of the vehicle is a whoops-road from a time at which the first value crosses a first threshold; an accumulation step of accumulating the second value as an accumulation value with passage of time; a determination step of determining whether the traveling road is the whoops-road based on the accumulation value; and a control step of adjusting a damping force of a suspension of the vehicle.

The whoops-road determination device according to one aspect of the present invention includes an acquisition unit configured to acquire a first value corresponding to pitch information related to pitch motion of a vehicle on the basis of an output signal from a sensor mounted on the vehicle, a calculation unit configured to calculate a second value serving as a basis for determination whether a traveling road of the vehicle is a whoops-road from a time at which the first value crosses a first threshold, an accumulation unit conf igured to accumulate the second value as an accumulation value with passageof time, and a determination unit configured to determine whether the traveling road is a whoops-road on the basis of the accumulation value. Accordingly, it is possible to appropriately determine whether the traveling road on which the vehicle travels is a whoops-road even when the vehicle travels on a rough road such as a so-called "off-road".

The vehicle control method according to another aspect of the present invention includes an acquisition step of acquiring a first value corresponding to pitch information related to pitch motion of a vehicle on the basis of an output signal from a sensor mounted on the vehicle, a calculation step of calculating a second value serving as a basis for determination whether a traveling road of the vehicle is a whoops-road from a time at which the first value crosses a first threshold, an accumulation step of accumulating the second value as an accumulation value with passage of time, a determination step of determining whether the traveling road is a whoops-road on the basis of the accumulation value, and a control step of adjusting a damping force of a suspension of the vehicle. Accordingly, it is possible to appropriately determine whether the traveling road on which the vehicle travels is a whoops-road, and it is also possible to appropriately adjust the attitude of the vehicle even in a case where the traveling road on which the vehicle travels is the whoops-road.

### BRIEF DESCRIPTION OF THE DRAWINGS

FIG. 1 is a side view illustrating the right side of a vehicle on which a vehicle control system and a vehicle control device according to an embodiment of the present invention are mounted;
FIG. 2 is a schematic diagram illustrating a configuration of the vehicle control system and the vehicle control device according to the present embodiment;
FIG. 3 is a side view illustrating the right side of a vehicle on which the vehicle control system and the vehicle control device according to the present embodiment are mounted and which is traveling;
FIG. 4 is a time chart illustrating an example of a pitch angular velocity detected by a sensor in a vehicle on the vehicle control system and the vehicle control device according to the present embodiment are mounted, and a counted time of a timer applied to the vehicle control system and the vehicle control device according to the present embodiment;
FIG. 5 is a data schematic diagram illustrating a relation between a counted time of the timer applied to the vehicle control system and the vehicle control device according to the present embodiment and a probability value as an example; and
FIG. 6 is a flowchart illustrating an example of vehicle control processing performed by the vehicle control system and the vehicle control device according to the present embodiment.

### DETAILED DESCRIPTION OF THE PREFERRED EMBODIMENTS

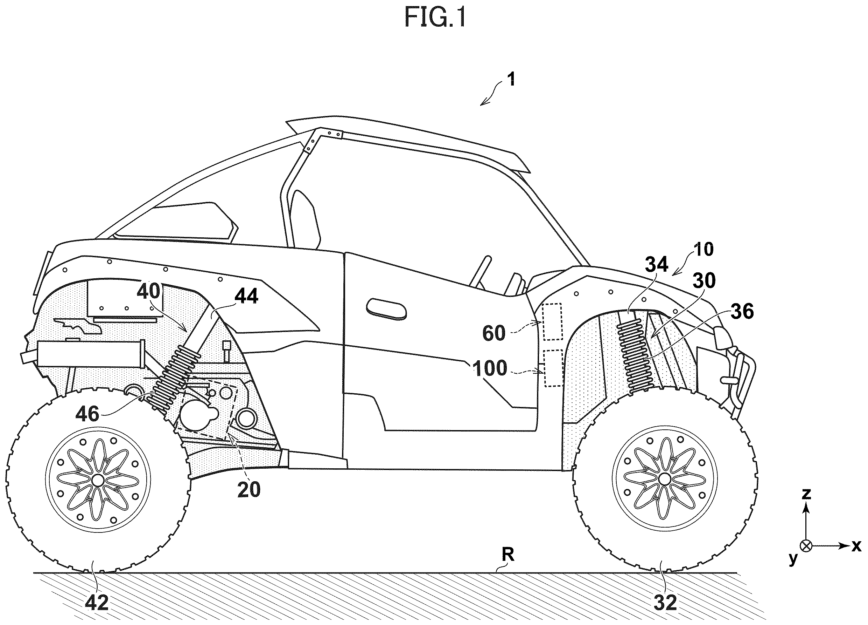

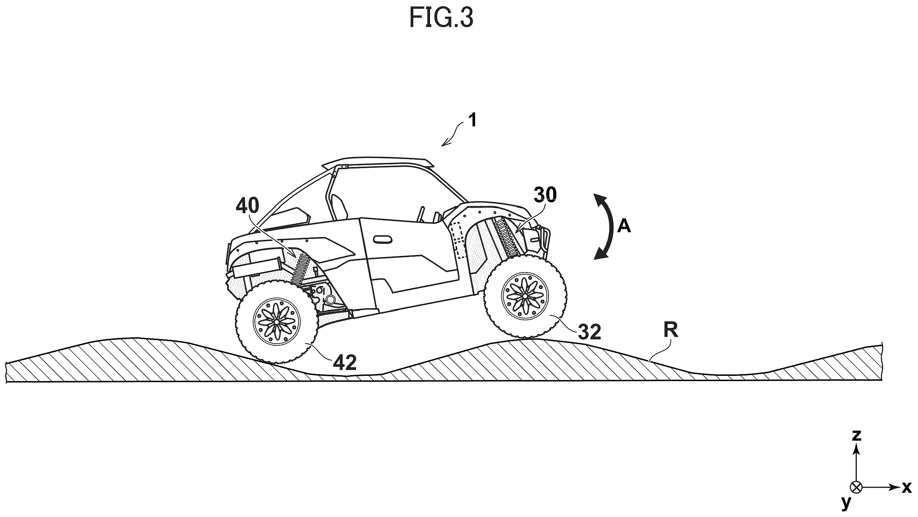

A vehicle control system, a vehicle control device, and a vehicle control method according to an embodiment of the present invention are described below in detail with reference to the drawings as appropriate. In the drawings, an x-axis, a y-axis, and a z-axis form a triaxial orthogonal coordinate system. Assuming the direction of the x-axis as the longitudinal direction and the traveling direction of a vehicle, the forward direction thereof is represented by the positive direction of the x-axis. Assuming the direction of the y-axis as the width direction of the vehicle, the left direction thereof is represented by a direction penetrating through the drawings of FIGS. 1 and 3 from the near side to the far side. Assuming the direction of the z-axis as the upper-lower direction and the vertical direction of the vehicle, the upper direction thereof is represented by the positive direction of the z-axis. A horizontal plane is assumed to be parallel to a plane defined by the x-axis and the y-axis.

### [Configuration related to vehicle]

First, a configuration of a vehicle to which a vehicle control system and a vehicle control device according to the present embodiment are applied is described in detail with reference to FIG. 1.

FIG. 1 is a side view illustrating the right side of a vehicle on which a vehicle control system and a vehicle control device according to the present embodiment are mounted. While only a front suspension, a front wheel, a rear suspension, and a rear wheel arranged on the right side are illustrated in FIG. 1, they are typically pairs of right and left parts, and a front suspension, a front wheel, a rear suspension, and a rear wheel are similarly arranged also on the left side.

As representatively illustrated in FIG. 1 as a side-by-side vehicle which is one type of small and lightweight four-wheeled off-road automobiles, a vehicle 1 typically includes a vehicle body 10 made of a metallic framework member such as an steel pipe material or an steel plate material (not illustrated), a drive source 20 that outputs a driving force of the vehicle 1, front suspensions 30 each interposed between the vehicle body 10 and a front wheel 32 to suspend the front wheel 32, and rear suspensions 40 each interposed between the vehicle body 10 and a rear wheel 42 to suspend the rear wheel 42, as main components. The vehicle 1 may be a vehicle called UTV (Utility Task Vehicle) or ROV (Recreational Off-highway Vehicle) as well as the vehicle called side-by-side vehicle. Alternatively, the vehicle 1 may be a three-wheeled automobile or the like as well as the four-wheeled automobile. An engine being an internal combustion engine, an electrical motor, or a combination of an engine and an electrical motor is applicable as the drive source 20. In the vehicle 1, it suffices that drive wheels are either the front wheels 32 or the rear wheels 42, or both thereof and steered wheels are only the front wheels 32 or both of the front wheels 32 and the rear wheels 42. A road surface on which the vehicle 1 travels is denoted by reference sign R.

Eachof the front suspensions 30 is electrically controlled and typically has an oil front damper 34, and a front spring 36 as a coil spring made of metal or the like. The front suspensions 30 are each capable of variably adjusting the damping force of the front damper 34 by activating an actuator (not illustrated) to increase or decrease the orifice diameter or the like of the front damper 34. As required, the front suspensions 30 are each additionally capable of variably adjusting the vehicle height that is the height of the vehicle body 10 from the road surface at a front side part of the vehicle body 10 of the vehicle 1 by increasing or decreasing the oil supply amount or the like to change the stroke position in the bump direction or the rebound direction. Similarly, each of the rear suspensions 40 is electrically controlled and typically has an oil rear damper 44, and a rear spring 46 as a coil spring made of metal or the like. The rear suspensions 40 are each capable of variably adjusting the damping force of the rear damper 44 and, as required, are additionally capable of variably adjusting the vehicle height at a rear side part of the vehicle body 10 of the vehicle 1. While the front suspension 30 and the rear suspension 40 are illustrated as a strut type in FIG. 1, those of other forms having a configuration in which a damper and a spring are mounted separately may be used.

In the vehicle 1, a drive-source control device 60 that controls the operating state of the drive source 20 is attached to the vehicle body 10, a support member coupled thereto, or the like. The drive-source control device 60 operates with a battery (not illustrated) mounted on the vehicle 1 as a power supply and is mainly constituted of an ECU (Electronic Control Unit) that is an arithmetic processing device including a microcomputer or the like comprised of a CPU (Central Processing Unit) and the like. For example, when an engine is applied as the drive source 20, the drive-source (engine) control device 60 controls the activated states of constituent elements of a firing system, a fuel supply system, and an air intake system such as a spark plug, an injector, and a throttle valve (all not illustrated) to control the operating state of the drive source (engine) 20. When an electrical motor is applied as the drive source 20, the drive-source (motor) control device 60 controls the activated state, i.e., ON and OFF of a switching element of an inverter (not illustrated) to control the operating state of the drive source (motor) 20. A control program and control data to be used by the drive-source control device 60 are stored in advance in a memory (not illustrated), and are read from the memory at the time of execution.

### [Configuration and operation related to vehicle control system and vehicle control device]

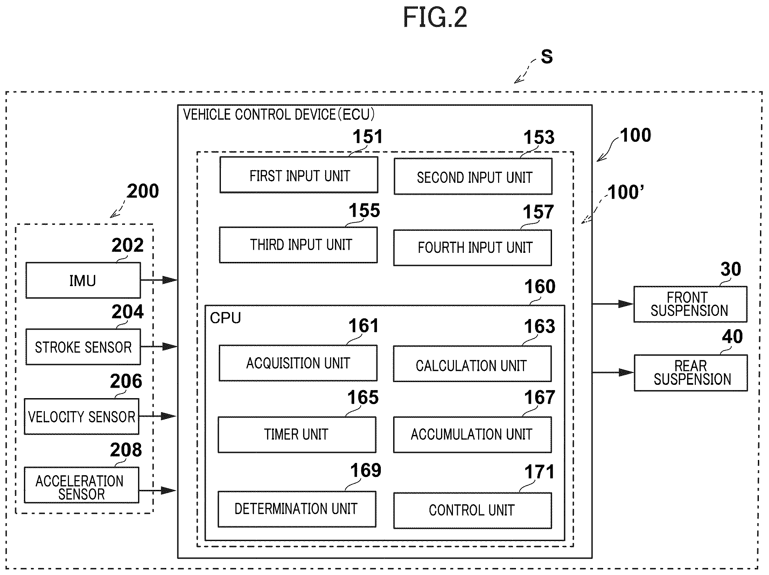

A configuration and an operation related to the vehicle control system and the vehicle control device according to the present embodiment are explained in detail next with reference also to FIGS. 2 to 6.

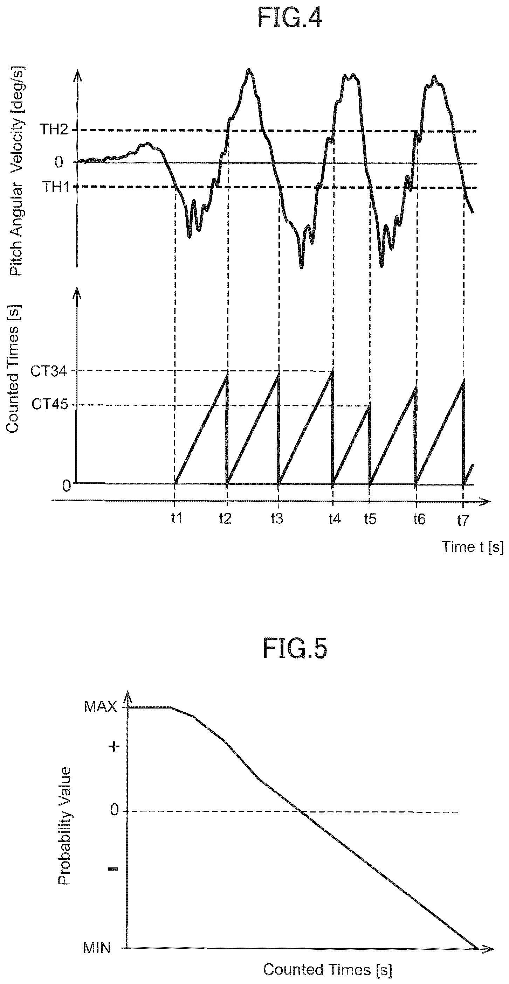

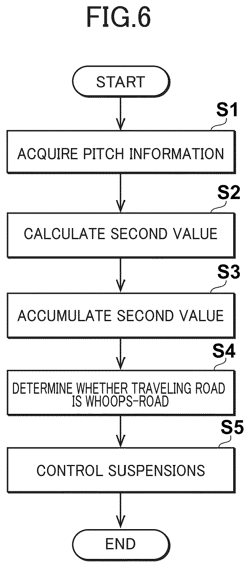

FIG. 2 is a schematic diagram illustrating a configuration of the vehicle control system and the vehicle control device according to the present embodiment. FIG. 3 is a side view illustrating the right side of a vehicle on which the vehicle control system and the vehicle control device according to the present embodiment are mounted and which is traveling. FIG. 4 is a time chart illustrating an example of a pitch angular velocity detected by a sensor in a vehicle on which the vehicle control system and the vehicle control device according to the present embodiment are mounted, and a counted time of a timer applied to the vehicle control system and the vehicle control device according to the present embodiment. FIG. 5 is a data schematic diagram illustrating a relation between a counted time of the timer applied to the vehicle control system and the vehicle control device according to the present embodiment and a probability value as an example. FIG. 6 is a flowchart illustrating an example of vehicle control processing performed by the vehicle control system and the vehicle control device according to the present embodiment.

As illustrated in FIGS. 1 and 2, a vehicle control system S includes avehicle control device 100 and, associated therewith, includes various types of sensors 200 including an IMU (Inertial Measurement Unit) 202, a stroke sensor 204, velocity sensor 206, and an acceleration sensor 208, the front suspensions 30, and the rear suspensions 40.

The vehicle control device 100 operates with a battery (not illustrated) mounted on the vehicle 1 as a power supply and is mainly constituted of an ECU as an arithmetic processing unit including a microcomputer or the like comprised of a CPU 160 and the like. The various types of sensors 200 including the IMU 202, the stroke sensor 204, the velocity sensor 206, and the acceleration sensor 208, and the like are electrically connected to the vehicle control device 100. The vehicle control device 100 functions as a control device that variably controls the damping force and the stroke position of each of the front suspensions 30 and the rear suspensions 40 by executing a control program on the basis of electric signals output from these sensors and the like while referring to control data. The vehicle control device 100 has first to fourth input units 151 to 157, and an acquisition unit 161, a calculation unit 163, a timer unit 165, an accumulation unit 167, a determination unit 169, and a control unit 171 in the CPU 160, which are respectively illustrated as functional blocks. The control program and the like are stored in advance in a memory (not illustrated) and are read from the memory at the time of execution. The vehicle control device 100 may be a control device integrated with the drive-source control device 60. In this case, the vehicle control device 100 functions as a control device that controls the operating state of the engine as the drive source 20, and also functions as a control device that variably controls the damping force and the stroke position of each of the front suspensions 30 and the rear suspensions 40. The vehicle control device 100 may be integrated with a dash-panel display control device and a vehicle-body control device. A whoops-road determination device 100' is typically included in the vehicle control device 100 and corresponds to the configuration including the first to fourth input units 151 to 157 and the acquisition unit 161, the calculation unit 163, the timer unit 165, the accumulation unit 167, and the determination unit 169 in the CPU 160. The operation of the whoops-road determination device 100' is identical to the operation of the vehicle control device 100 except for the operation of the control unit 171. Further, the control unit 171 may be added to the whoops-road determination device 100'. The whoops-road determination device 100' with the control unit 171 added thereto is equivalent to the vehicle control device 100.

The first input unit 151 is an electric circuit to which an electric signal that is output from the IMU 202 detecting accelerations in three-axis directions parallel to the x-axis, they-axis, and the z-axis of a vehicle and the angular velocities around these three axes, and that indicates the detected accelerations and the detected angular velocities is input. The IMU 202 has an acceleration sensor (a G-sensor) and a gyrosensor (both not illustrated), and the acceleration sensor detects the accelerations in the three-axis directions parallel to the x-axis, the y-axis, and the z-axis and the gyrosensor detects the angular velocities around the three axes parallel to the x-axis, the y-axis, and the z-axis.

The second input unit 153 is an electric circuit to which an electric signal that is output from the stroke sensor 204 detecting the amount of stroke in the range of an effective stroke length between a full bump and a full rebound of each of the right and left front suspensions 30 and the right and left rear suspensions 40 with respect to, for example, a 1G-position, and that indicates the detected amount of stroke, that is, the stroke position is input. Typically, the stroke sensor 204 is provided for each of the front suspension 30 and the rear suspension 40.

The third input unit 155 is an electric circuit to which an electric signal that is output from the velocity sensor 206 provided for the front suspensions 30 and the rear suspensions 40 and detecting velocities on the rebound motion and the compression motion in the front part and the rear part of the vehicle body 10 of the vehicle 1 and that indicates the detected velocities is input. Typically, the velocity sensor 206 is provided for each of the front suspensions 30 and the rear suspensions 40.

The fourth input unit 157 is an electric circuit to which an electric signal that is output from the acceleration sensor (a G-sensor) 208 detecting the accelerations in the x-axis, y-axis, and z-axis directions and that indicates the detected accelerations is input. Typically, the acceleration sensor 208 may be applied to replace the IMU 202.

The acquisition unit 161 acquires pitch information related to pitch motion of the vehicle 1 in which the front wheels 32 and the rear wheels 42 move up and down relative to each other on the basis of the electric signal output from the IMU 202 and input to the first input unit 151. Specifically, it is preferable that the acquisition unit 161 acquires the pitch angular velocity of the vehicle 1 so as to appropriately acquire the pitch information related to the pitch motion of the vehicle 1. The pitch angular velocity of the vehicle 1 can be acquired by the acquisition unit 161 on the basis of the output signal output from the gyrosensor in the IMU 202, and is an angular velocity A around the pitch axis of the vehicle 1. Typically, the pitch axis is an axis extending in parallel to the width direction (the direction of the y-axis) through the position of the center of gravity of the vehicle 1.

From the perspective of subtracting pitch information of the vehicle 1 due to an operation by a driver of the vehicle 1 from the entire pitch information of the vehicle 1 to accurately detect pitch motion of the vehicle 1 due to a traveling road R of the vehicle 1, the acquisition unit 161 preferably calculates the pitch angular velocity A of the vehicle 1 on the basis of a difference value between an acquired value being the entire pitch angular velocity of the vehicle 1 acquired from the entire pitch information of the vehicle 1 and an estimated value being the pitch angular velocity of the vehicle 1 due to the operation by the driver of the vehicle 1 calculated from the pitch information related to the pitch motion of the vehicle 1 due to the driver's operation.

In this calculation, from the perspective of appropriately calculating the estimated value being the pitch angular velocity of the vehicle 1 due to the driver's operation, the acquisition unit 161 preferably calculates this estimated value by using a predetermined vehicle model defined by an equation of motion representing motion of the vehicle 1. Further, from the perspective of appropriately identifying the estimated value corresponding to the pitch angular velocity due to the driver's operation, this estimated value is preferably calculated from the pitch information related to the pitch motion of the vehicle 1 calculated, as needed, through filtering, more specifically, the pitch angular velocity on the basis of the electric signal output from the acceleration sensor 208 and input to the fourth input unit 157.

In order to appropriately acquire the pitch information related to this pitch motion of the vehicle 1, the acquisition unit 161 may calculate the pitch angular velocity A of the vehicle 1 on the basis of the electric signal output from the stroke sensor 204 and input to the second input unit 153. In this case, for example, the pitch angular velocity A can be calculated by a differential operation by the acquisition unit 161 performed on the pitch angle of the vehicle 1 calculated by the acquisition unit 161 on the basis of output signals output from the right/left and front/rear stroke sensors 204 respectively provided for the right and left front suspensions 30 and the rear suspensions 40. The pitch angle of the vehicle 1 can be calculated by the acquisition unit 161 by using a difference between the front and rear stroke amounts on the basis of the output signals output from the right/left and front/rear stroke sensors 204. Also in a case where the calculation is performed based on the electric signal output from the stroke sensor 204 and input to the second input unit 153 in this manner, the pitch motion of the vehicle 1 due to the traveling road R of the vehicle 1 may be detected by subtracting the pitch information of the vehicle 1 due to the operation by the driver of the vehicle 1 from the entire pitch information of the vehicle 1.

In order to appropriately acquire the pitch information related to this pitch motion of the vehicle 1, the acquisition unit 161 may calculate the pitch angular velocity A of the vehicle 1 on the basis of the electric signal output from the acceleration sensor 208 and input to the fourth input unit 157. In this case, for example, the pitch angular velocity A can be calculated from the accelerations each in the z-axis direction, obtained with the electric signals output from at least two acceleration sensors 208, which are provided with the predetermined distance along the longitudinal direction of the vehicle 1, and input to the fourth input unit 157. Also in a case where the calculation is performed based on the electric signals output from the acceleration sensors 208 and input to the fourth input unit 157 in this manner, the pitch motion of the vehicle 1 due to the traveling road R of the vehicle 1 may be detected by subtracting the pitch information of the vehicle 1 due to the operation by the driver of the vehicle 1 from the entire pitch information of the vehicle 1. In addition, the pitch angular velocity A can be calculated by a differential operation by the acquisition unit 161 performed on the pitch angle of the vehicle 1 calculated by the acquisition unit 161 on the basis of the output signal output from one acceleration sensor 208 and input to the fourth input unit 157. In this case, the pitch angle of the vehicle 1 can be calculated by the acquisition unit 161 so as to correspond to a ratio of acceleration components on the basis of the output signal output from this acceleration sensor 208.

The calculation unit 163 calculates the second value serving as the basis for determination whether the traveling road R of the vehicle 1 corresponds to a whoops-road. Specifically, as illustrated in FIG. 4, this second value is calculated by the calculation unit 163 from a time at which the pitch angular velocity A of the vehicle 1 acquired by the acquisition unit 161 crosses a predetermined threshold. In order to reliably detect the shape of bumps and dips on a whoops-road so as to allow the second value to serve as the appropriate basis for determination, this predetermined threshold is preferably set to a value that is between the minimum value and the maximum value of the pitch angular velocity A taking a value corresponding to the shape of bumps and dips on the whoops-road and is closer to the minimum value or the maximum value. For example, in a case where the predetermined threshold is set to a value that is between the minimum value and the maximum value of the pitch angular velocity A and is closer to the minimum value, it is preferable that the calculation unit 163 starts calculation of the second value when the pitch angular velocity A crosses a predetermined threshold TH1 while decreasing (e.g., at a time t1 illustrated in FIG. 4). Meanwhile, in a case where the predetermined threshold is set to a value that is between the minimum value and the maximum value of the pitch angular velocity A and is closer to the maximum value, it is preferable that the calculation unit 163 starts calculation of the second value when the pitch angular velocity A crosses a predetermined threshold TH2 while increasing (e.g., at a time t2 illustrated in FIG. 4: TH2>0>TH1 as one example) . In FIG. 4, the calculation unit 163 starts calculation of the second value at the time t1 at which the pitch angular velocity A first crosses the predetermined threshold TH1 while decreasing.

From the perspective that it can be appropriately determined whether the traveling road R corresponds to a whoops-road, it is preferable that the second value calculated by the calculation unit 163 is a probability value indicating the probability that the traveling road R corresponds to a whoops-road, and it is also preferable that this probability value is set to decrease as the time counted by the timer unit 165 increases. That is, it is typically preferable that this probability value is defined in advance to correspond to a value of the pitch angular velocity A of the vehicle 1, and it is also preferable that the probability value defined in this manner is defined to decrease as the time counted by the timer unit 165 increases as illustrated in FIG. 5. Further, from the perspective that determination whether the traveling road R corresponds to a whoops-road can be made appropriately, it is preferable that this probability value is defined to indicate a negative value while decreasing as the time counted by the timer unit 165 increases. In other words, from the perspective of adjusting the accumulation value accumulated by the accumulation unit 167 so as to ensure the flexibility of determination by the determination unit 169, it is preferable that, to enable adjustment of the accumulation value accumulated by the accumulation unit 167, this probability value is defined to decrease as the time counted by the timer unit 165 increases. It is preferable that this probability value is converted into data in advance, and it is also preferable that the probability value converted into data in this manner is stored in a memory of the vehicle control device 100 and can be referred to by being read by the vehicle control device 100.

The timer unit 165 starts time counting at a time at which the pitch angular velocity A of the vehicle 1 acquired by the acquisition unit 161 crosses a predetermined threshold, and ends the time counting at a time at which this pitch angular velocity A crosses another predetermined threshold. For example, in a case where the predetermined thresholds TH1 and TH2 are defined as illustrated in FIG. 4, the timer unit 165 starts time counting at the time t1, a time t3, a time t5, and the like at which the pitch angular velocity A crosses the predetermined threshold TH1 downward and then ends the time counting at the time t2, a time t4, a time t6, and the like at which the pitch angular velocity A crosses the predetermined threshold TH2 upward, and resets the counted time that is the result of the time counting to an initial value (e.g., 0) after the pitch angular velocity A crosses the predetermined threshold TH1 upward. In addition, the timer unit 165 starts the time counting at the times t2, t4, t6, and the like at which the pitch angular velocity A crosses the predetermined threshold TH2 upward and then ends the time counting at the times t1, t3, and t5, and the like at which the pitch angular velocityA crosses the predetermined threshold TH1 downward, and resets the counted time that is the result of the time counting to the initial value (e.g., 0) after the pitch angular velocityA crosses the predetermined threshold TH2 downward. Accordingly, it is possible to reliably reflect a state in which the vehicle 1 goes over a dip on a whoops-road and goes up the slope of an adjacent bump or a state in which the vehicle 1 goes over a bump on a whoops-road and goes down the slope of an adjacent dip, based on time counting.

Further, as the length of time period from the time at which the pitch angular velocity A crosses the predetermined threshold TH1 downward to the time at which, after the pitch angular velocity A crosses the predetermined threshold TH1 upward, the pitch angular velocity A then crosses the predetermined threshold TH2 upward or the length of time period from the time at which the pitch angular velocity A crosses the predetermined threshold TH2 upward to the time at which, after the pitch angular velocity A crosses the predetermined threshold TH2 downward, the pitch angular velocity A then crosses the predetermined threshold TH1 downward is longer, the time counted by the timer unit 165 is longer. For example, in FIG. 4, a length of time period (t4-t3) from the time t3 at which the pitch angular velocity A crosses the predetermined threshold TH1 downward to the time t4 at which, after the pitch angular velocity A crosses the predetermined threshold TH1 upward, the pitch angular velocity A then crosses the predetermined threshold TH2 upward is longer than a length of time period (t5-t4) from the time t4 at which the pitch angular velocity A crosses the predetermined threshold TH2 upward to the time t5 at which, after the pitch angular velocity A crosses the predetermined threshold TH2 downward, the pitch angular velocity A then crosses the predetermined threshold TH1 downward. Therefore, a counted time CT34 from the time t3 to the time t4 is longer than a counted time CT45 from the time t4 to the time t5.

The accumulation unit 167 accumulates the second value calculated by the calculation unit 163 as the accumulation value with the passage of time. This accumulation value is used for determination whether the traveling road R of the vehicle 1 corresponds to a whoops-road when this determination is made. For example, time counting by the timer unit 165 illustrated in FIG. 4 is referred to, the second value calculated by the calculation unit 163 is accumulated in each of a time period from the time t1 to the time t2, a time period from the time t2 to the time t3, a time period from the time t3 to the time t4, a time period from the time t4 to the time t5, a time period from the time t5 to the time t6, and a time period from the time t6 to the time t7 each of which is a time period from the start to the end of time counting by the timer unit 165. In each of these time periods, a current value of the second value (a value obtained by current calculation of the second value by the calculation unit 163) is added to a previous value of the accumulation value (a value obtained by previous calculation of the accumulation value by the accumulation unit 167, which is an initial value set to, for example, zero if the current calculation is the first calculation of the accumulation value).

In a case where the probability value is applied as the second value, the accumulation unit 167 accumulates the probability value calculated by the calculation unit 163 as the accumulation value with the passage of time. In a case where the probability value is defined to decrease as the time counted by the timer unit 165 increases, the degree of increase in the accumulation value decreases along therewith. Further, in a case where the probability value is defined to indicate a negative value while decreasing as the time counted by the timer unit 165 increases, the degree of increase in the accumulation value and the accumulation value itself decrease along therewith. In other words, the accumulation value accumulated by the accumulation unit 167 is made adjustable by defining the probability value to decrease with increase in the counted time obtained by the timer unit 165. Further, when the front wheels 32 and the rear wheels 42 of the vehicle 1 leave contact with the traveling road R, the accumulation value should be reduced before being passed to the determination unit 169, and it is therefore preferable to modify the accumulation value at the time at which the accumulation unit 167 determines that the front wheels 32 and the rear wheels 42 leave contact with the traveling road R. In addition, as one example, such modification applied on the accumulation value may be the reduction by multiplying the accumulation value by the predetermined gain value.

The determination unit 169 determines whether the traveling road R of the vehicle 1 corresponds to a whoops-road on the basis of the accumulation value accumulated by the accumulation unit 167. For example, it is assumed that a determination threshold is set to a predetermined value in such a manner that, in a case where the probability value is applied as the second value, the traveling road R of the vehicle 1 is determined as corresponding to a whoops-road when the probability value is a predetermined value or larger. In this case, the determination unit 169 determines that the traveling road R of the vehicle 1 corresponds to a whoops-road when determining that the accumulation value accumulated by the accumulation unit 167, which is the probability value, is the predetermined value being the determination threshold or larger. When time counting by the timer unit 165 illustrated in FIG. 4 is referred to, for example, the timing of this determination by the determination unit 169 can be set in the middle of the time period from the time t1 to the time t2, the time period from the time t2 to the time t3, the time period from the time t3 to the time t4, the time period from the time t4 to the time t5, the time period from the time t5 to the time t6, and the time period from the time t6 to the time t7 each of which is the time period from the start to the end of time counting by the timer unit 165, in principle. However, from the perspective of improving the accuracy of determination by the determination unit 169 that the traveling road R corresponds to a whoops-road, it is preferable that the timing of determination is the times t2, t3, t4, t5, t6, and t7 that are timings at which the time counting by the timer unit 165 ends.

The control unit 171 adjusts at least one of the damping force of the vehicle 1 and the height of vehicle 1(vehicle height) when the determination unit 169 determines that the traveling road R is the whoops-road, from the perspective of adjusting the attitude of the vehicle 1. In this adjustment, it is preferable that constituent elements of the vehicle 1 to be controlled by the control unit 171 are typically at least either the front suspensions 30 or the rear suspensions 40. In this case, the control unit 171 controls the damping forces or stroke positions of at least either thereof.

In a case where the control unit 171 adjusts the damping force of the vehicle 1, it is preferable that the control unit 171 adjusts the damping force of the vehicle 1 to lower the rear part of the vehicle body 10 relative to the front part of the vehicle body 10 in accordance with the velocity of the rebound motion and the velocity of the compression motion each in the front part and the rear part of the vehicle body 10 of the vehicle 1, from the perspective of adjusting the attitude of the vehicle 1 to improve the road ability when the determination unit 169 determines the traveling road R as being the whoops-road. From the perspective of relatively lowering the rear part of the vehicle body 10 reliably, it is preferable that the control unit 171 performs at least one of increasing the damping forces of the compression motions of the front suspensions 30 or reducing the damping forces of the rebound motions of the front suspensions 30 and reducing the damping forces of the compression motions of the rear suspensions 40 or increasing the damping forces of the rebound motions of the rear suspensions 40 when the determination unit 169 determines the traveling road Ras being the whoops-road. Further, from the perspective of adjusting the degree of attitude change of the vehicle 1 in accordance with improving stability of the vehicle 1, it is preferable that, when the determination unit 169 determines the traveling road R as being the whoops-road, the control unit 171 increases or reduces the damping force of the vehicle 1 as compared with a normal case in which the traveling road R is not determined as being the whoops-road. A relation between a value of the velocity calculated by the acquisition unit 161 and a value of the damping force of the vehicle 1 which is typically a value of the damping force of the front suspensions 30 and a value of the damping force of the rear suspensions 40 may be defined, converted into data, and stored in a memory in advance, and the control unit 171 may read and refer to the data stored in the memory when adjusting the damping force of the vehicle 1. In addition, the velocity of the rebound motion and the velocity of the compression motion in the front part and the rear part of the vehicle body 10 of the vehicle 1 can be calculated with the acquisition unit 161, by differentiating the stroke of the rebound motion and the stroke of the compression motion with respect to time, on the basis of the electric signals output from the stroke sensors 204 and input to the second input unit 153, by integrating the difference between the acceleration of the vehicle body 10 and the acceleration of the wheel/unsprung suspension, on the basis of the electric signal output from the acceleration sensor 208, provided on the vehicle body 10, and that output from the acceleration sensor 208,provided on the wheel/unsprung suspension, and input to the fourth input unit 157, or by using the velocity of the rebound motion and the velocity of the compression motion in the front part and the rear part of the vehicle body 10,on the basis of the electric signals output from the velocity sensors 206 and input to the third input unit 155.

In a case where the control unit 171 adjusts the height of the vehicle 1, it is preferable that the control unit 171 lowers the rear part of the vehicle body 10 relative to the front part of the vehicle body 10, that is, performs at least one of raising the height of the front part of the vehicle body 10 and lowering the height of the rear part of the vehicle body 10 to adjust the attitude of the vehicle 1 and improve the road ability, when the determination unit 169 determines the traveling road R as being the whoops-road.

Focusing on the operations of the acquisition unit 161, the calculation unit 163, the timer unit 165, the accumulation unit 167, the determination unit 169, and the control unit 171 in the vehicle control device 100, one example of these operations is vehicle control processing as in a flowchart illustrated in FIG. 6. The vehicle control processing illustrated in FIG. 6 is typically started at a timing when a power switch (not illustrated) of a vehicle is changed from an off-state to an on-state and the CPU 160 of the vehicle control device 100 is activated, and the vehicle control processing proceeds to a process at Step S1. This vehicle control processing is performed repeatedly with a predetermined period while the CPU 160 is activated.

As illustrated in FIG. 6, as described above, in the process at Step S1, the acquisition unit 161 calculates the pitch angular velocity A of the vehicle 1 on the basis of the electric signal output from the IMU 202 and input to the first input unit 151. As described above, the acquisition unit 161 may calculate the pitch angular velocity A of the vehicle 1 on the basis of the electric signal output from the stroke sensor 204 and input to the second input unit 153, or may calculate the pitch angular velocity A of the vehicle 1 on the basis of the electric signal output from at least one acceleration sensor 208 and input to the fourth input unit 157. Accordingly, the process at Step S1 is completed, and the vehicle control processing proceeds to a process at Step S2.

In the process at Step S2, as described above, the calculation unit 163 starts calculation of the second value at a time at which the pitch angular velocity A of the vehicle 1 acquired by the acquisition unit 161 crosses a predetermined threshold. From the perspective that it can be appropriately determined whether the traveling road R corresponds to a whoops-road, it is preferable that the second value calculated by the calculation unit 163 is a probability value indicating the probability that the traveling road R corresponds to the whoops-road, and it is also preferable that this probability value is set to decrease as the time counted by the timer unit 165 increases. In other words, from the perspective of adjusting the accumulation value accumulated by the accumulation unit 167 to ensure the flexibility of determination by the determination unit 169, it is preferable that, to enable adjustment of the accumulation value accumulated by the accumulation unit 167, this probability value is defined to decrease as the time counted by the timer unit 165 increases. Accordingly, the process at Step S2 is completed, and the vehicle control processing proceeds to a process at Step S3.

In the process at Step S3, as described above, the accumulation unit 167 accumulates the second value calculated by the calculation unit 163 as the accumulation value with the passage of time counted by the timer unit 165. In a case where the probability value is applied as the second value, the accumulation unit 167 accumulates the probability value calculated by the calculation unit 163 as the accumulation value with the passage of time. In a case where the probability value is defined to decrease with increase in the time counted by the timer unit 165, the degree of increase in the accumulation value accumulated by the accumulation unit 167 decreases along therewith. In a case where the probability value is defined to indicate a negative value while decreasing with increase in the time counted by the timer unit 165, the degree of increase in the accumulation value accumulated by the accumulation unit 167 and the accumulation value itself decrease along therewith. Further, when the front wheels 32 and the rear wheels 42 of the vehicle 1 leave contact with the traveling road R, the accumulation value should be reduced before being passed to the determination unit 169. Therefore, it is preferable to modify the accumulation value at a time at which the accumulation unit 167 determines that the front wheels 32 and the rear wheels 42 leave contact with the traveling road R on the basis of the electric signals output from the various sensors 200 and the like. Accordingly, the process at Step S3 is completed, and the vehicle control processing proceeds to a process at Step S4.

In the process at Step S4, as described above, the determination unit 169 determines whether the traveling road R of the vehicle 1 corresponds to a whoops-road on the basis of the accumulation value accumulated by the accumulation unit 167. For example, it is assumed that a determination threshold is set to a predetermined value in such a manner that, in a case where the probability value is applied as the second value, the traveling road R of the vehicle 1 is determined as corresponding to a whoops-road when the probability value is the predetermined value or larger. In this case, the determination unit 169 determines that the traveling road R of the vehicle 1 corresponds to the whoops-road when determining that the accumulation value accumulated by the accumulation unit 167, which is the probability value, is the predetermined value being the determination threshold or larger. Accordingly, the process at Step S4 is completed, and the vehicle control processing proceeds to a process at Step S5. When the determination unit 169 does not determine that the traveling road R of the vehicle 1 corresponds to the whoops-road, the process at Step S4 is repeated.

In the process at Step S5, as described above, the control unit 171 adjusts at least one of the damping force of the vehicle 1 and the height of vehicle 1 when the determination unit 169 determines that the traveling road R is the whoops-road. In a case where the control unit 171 adjusts the damping force of the vehicle 1, from the perspective of calculating, on the basis of the electric signal output from the velocity sensor 206 and input to the third input unit 155, the velocity corresponding to the electric signal to adjust the attitude of the vehicle 1 and improve the road ability, it is preferable that the control unit 171 adjusts the damping force of the vehicle 1 in accordance with the velocity calculated to lower the rear part of the vehicle body 10 relative to the front part of the vehicle body 10, when the determination unit 169 determines the traveling road R as being the whoops-road. Further, from the perspective of relatively lowering the rear part of the vehicle body 10 reliably, it is preferable that the control unit 171 performs at least one of increasing the damping forces of the compression motions of the front suspensions 30 or reducing the damping forces of the rebound motions of the front suspensions 30 and reducing the damping forces of the compression motions of the rear suspensions 40 or increasing the damping forces of the rebound motions of the rear suspensions 40 when the determination unit 169 determines the traveling road R as being the whoops-road. Further, from the perspective of adjusting the degree of attitude change of the vehicle 1 in accordance with improving stability of the vehicle 1, when the determination unit 169 determines the traveling road R as being the whoops-road, the control unit 171 preferably increases or reduces the damping force of the vehicle 1 as compared with a normal case in which the traveling road R is not determined as being a whoops-road. Meanwhile, in a case where the control unit 171 adjusts the height of the vehicle 1, it is preferable that the control unit 171 lowers the rear part of the vehicle body 10 relative to the front part of the vehicle body 10, that is, performs at least one of raising the height of the front part of the vehicle body 10 and lowering the height of the rear part of the vehicle body 10 to adjust the attitude of the vehicle 1 and improve the road ability when the determination unit 169 determines the traveling road R as being the whoops-road. Accordingly, the process at Step S5 is completed, and this series of the vehicle control processing ends.

As is apparent from the above description, a first aspect of the whoops-road determination device 100' according to the present embodiment includes the acquisition unit 161 configured to acquire a first value corresponding to pitch information related to pitch motion of the vehicle 1 on the basis of an output signal from the sensor 202, 204, or 208 mounted on the vehicle 1, the calculation unit 163 configured to calculate a second value serving as a basis for determination whether the traveling road R of the vehicle 1 is a whoops-road from a time at which the first value crosses a first threshold, the accumulation unit 167 configured to accumulate the second value as an accumulation value with passage of time, and the determination unit 169 configured to determine whether the traveling road R is the whoops-road on the basis of the accumulation value. Accordingly, it is possible to determine whether the traveling road R on which the vehicle 1 travels is a whoops-road appropriately even when the vehicle 1 travels on a rough road such as a so-called "off-road".

In a second aspect of the whoops-road determination device 100' according to the present embodiment, in addition to the first aspect, the acquisition unit 161 calculates the first value on the basis of a difference value between an acquired value acquired from pitch information and an estimated value calculated from pitch information related to pitch motion of the vehicle 1 due to an operation by a driver of the vehicle 1. Accordingly, it is possible to detect the pitch motion of the vehicle 1 due to the traveling road R of the vehicle 1 accurately.

In a third aspect of the whoops-road determination device 100' according to the present embodiment, in addition to the second aspect, the acquisitionunit 161 calculates the estimated value by using a vehicle model defined by an equation of motion representing motion of the vehicle 1. Accordingly, it is possible to calculate the estimated value due to the driver's operation more appropriately.

In a fourth aspect of the whoops-road determination device 100' according to the present embodiment, in addition to the second or third aspect, the estimated value is calculated from the pitch information related to the pitch motion of the vehicle 1 calculated on the basis of an output signal from the acceleration sensor 208 mounted on the vehicle 1. Accordingly, it is possible to calculate the estimated value due to the driver's operation more appropriately.

In a fifth aspect of the whoops-road determination device 100' according to the present embodiment, in addition to any of the first to fourth aspects, the whoops-road determination device 100' further includes the control unit 171 adjusting the damping force of the vehicle 1 when the traveling road R is determined as being the whoops-road. Accordingly, it is possible to adjust the attitude of the vehicle 1.

In a sixth aspect of the whoops-road determination device 100' according to the present embodiment, in addition to the fifth aspect, the sensor 204, 206, 208, configured to output a signal, with which the acquisition unit 161 calculates the velocity of the rebound motion and the velocity of the compression motion of the front part and the rear part of the vehicle 1, and the suspension 30 and 40 are mounted on the vehicle 1, and the control unit 171 adjusts the damping forces of the suspensions 30 and/or 40 to lower the rear part of the vehicle body 10 on the basis of the output signal from the sensor 204, 206, 208 in accordance with the velocity of the rebound motion and the velocity of the compression motion when the traveling road R is determined as being the whoops-road. Accordingly, it is possible to adjust the attitude of the vehicle 1 more appropriately.

In a seventh aspect of the whoops-road determination device 100' according to the present embodiment, in addition to the fifth or sixth aspect, when the traveling road R is determined as being the whoops-road, the control unit 171 performs at least one of increasing the damping force of the compression motion of the front part of the vehicle body 10 of the vehicle 1 or reducing the damping force of the rebound motion of the front part of the vehicle body 10 of the vehicle 1 and reducing the damping force of the compression motion of the rear part of the vehicle body 10 of the vehicle 1 or increasing the damping force of the rebound motion of the rear part of the vehicle body 10 of the vehicle 1. Accordingly, it is possible to adjust the attitude of the vehicle 1 and improve the road ability.

In an eighth aspect of the whoops-road determination device 100' according to the present embodiment, in addition to any of the fifth to seventh aspects, the control unit 171 increases or reduces the damping force of the vehicle 1 as compared with a normal case where the traveling road R is not determined as being the whoops-road, when the traveling road R is determined as being the whoops-road. Accordingly, it is possible to adjust the degree of attitude change of the vehicle 1 in accordance with improving stability of the vehicle 1.

In a ninth aspect of the whoops-road determination device 100' according to the present embodiment, in addition to any of the first to fourth aspects, the whoops-road determination device 100' includes the control unit 171 adjusting the height of the vehicle 1. Accordingly, it is possible to adjust the attitude of the vehicle 1 when the traveling road R is determined as being the whoops-road.

In a tenth aspect of the whoops-road determination device 100' according to the present embodiment, in addition to the ninth aspect, when the traveling road R is determined as being the whoops-road, the control unit 171 performs at least one of raising a height of the front part of the vehicle body 10 of the vehicle 1 and lowering a height of the rear part of the vehicle body 10 of the vehicle 1. Accordingly, it is possible to adjust the attitude of the vehicle 1 and improve the road ability.

In an eleventh aspect of the whoops-road determination device 100' according to the present embodiment, in addition to any of the first to tenth aspects, the whoops-road determination device 100' includes the timer unit 165 that starts time counting at a time when the first value calculated on the basis of the pitch information crosses the first threshold downward, and then ends the time counting and resets a counted time obtained by the time counting at a time at which, after the first value exceeds the first threshold, the first value crosses the second threshold greater than the first threshold upward, or that starts time counting at a time at which the first value crosses the second threshold upward, and then ends the time counting and resets a counted time obtained by the time counting at a time at which, after the first value falls below the second threshold, the first value crosses the first threshold downward. Accordingly, it is possible to perform time counting for determination whether the traveling road R of the vehicle 1 is the whoops-road.

**In** a twelfth aspect of the whoops-road determination device 100' according to the present embodiment, **in** addition to the eleventh aspect, the second value is a probability value indicating a probability that the traveling road R is the whoops-road, and the probability value is set to decrease as the counted time increases. Accordingly, it is possible to accurately determine whether the traveling road R of the vehicle 1 is the whoops-road.

In a thirteenth aspect of the whoops-road determination device 100' according to the present embodiment, in addition to the twelfth aspect, the probability value is set to be a negative value as the counted time increases, and when the probability value being the negative value is accumulated to the accumulation value, the accumulation value decreases. Accordingly, it is possible to determine whether the traveling road R of the vehicle 1 is the whoops-road more appropriately.

In a fourteenth aspect of the whoops-road determination device 100' according to the present embodiment, in addition to the twelfth or thirteenth aspect, the probability value decreases with increase in the counted time to make the accumulation value adjustable. Accordingly, it is possible to adjust the degree of attitude change of the vehicle 1 in accordance with improving stability of the vehicle 1.

In a fifteenth aspect of the whoops-road determination device 100' according to the present embodiment, in addition to any of the first to fourteenth aspects, the accumulation value is modified when the front wheels 32 and rear wheels 42 of the vehicle 1 leave contact with the traveling road R. Accordingly, it is possible to prevent unnecessary calculation of the accumulation value.

In a sixteenth aspect of the whoops-road determination device 100' according to the present embodiment, in addition to any of the first to fifteenth aspects, the pitch information is a pitch angular velocity of the vehicle 1, and the pitch angular velocity is acquired on the basis of the output signal output from the inertial measurement unit 202. Accordingly, it is possible to obtain appropriate pitch information.

In a seventeenth aspect of the whoops-road determination device 100' according to the present embodiment, in addition to any of the first to fifteenth aspects, the pitch information is a pitch angular velocity of the vehicle 1, and the pitch angular velocity is acquired on the basis of the output signal output from the stroke sensor 204. Accordingly, it is possible to obtain appropriate pitch information.

In an eighteenth aspect of the whoops-road determination device 100' according to the present embodiment, in addition to any of the first to fifteenth aspects, the pitch information is a pitch angular velocity of the vehicle 1, and the pitch angular velocity is acquired on the basis of the output signal output from at least one acceleration sensor 208. Accordingly, it is possible to obtain appropriate pitch information.

A vehicle control method according to another aspect of the present invention includes an acquisition step of acquiring a first value corresponding to pitch information related to pitch motion of the vehicle 1 on the basis of an output signal from the sensor 202, 204, or 208 mounted on the vehicle 1, a calculation step of calculating a second value used for determination whether the traveling road R of the vehicle 1 is a whoops-road from a time at which the first value crosses a first threshold, an accumulation step of accumulating the second value as an accumulation value with passage of time, a determination step of determining whether the traveling road R is the whoops-road on the basis of the accumulation value, and a control step of adjusting damping forces of the suspensions 30 and/or 40 of the vehicle 1. Accordingly, it is possible to appropriately determine whether the traveling road R on which the vehicle 1 travels is a whoops-road and appropriately adjust the attitude of the vehicle 1 even in a case where the traveling road R on which the vehicle travels is a whoops-road.

In the present invention, the types, shapes, arrangements, numbers, and the like of the constituent members are not limited to those in the above embodiment, and it is needless to mention that the constituent elements can be modified as appropriate without departing from the scope of the invention, such as appropriately replacing these constituent elements with other members having equivalent operational effects.

As described above, in the present invention, it is possible to provide a whoops-road determination device that can appropriately determine whether a traveling road on which a vehicle travels is a whoops-road even when the vehicle travels on a rough road such as a so-called "off-road", and a vehicle control method that can control a vehicle, and because of its general purposes and universal characteristics, applications of the present invention can be expected in a wide range in the field of automobiles including motor cycles and the like.

## Claims

1. A whoops-road determination device comprising:
an acquisition unit configured to acquire a first value corresponding to pitch information related to pitch motion in a vehicle based on an output signal from a sensor mounted on the vehicle;
a calculation unit configured to calculate a second value serving as a basis for determination whether a traveling road of the vehicle is a whoops-road from a time at which the first value crosses a first threshold;
an accumulation unit configured to accumulate the second value as an accumulation value with passage of time; and
a determination unit configured to determine whether the traveling road is the whoops-road based on the accumulation value.

2. The whoops-road determination device according to claim 1, wherein the acquisition unit calculates the first value based on a difference value between an acquired value acquired from the pitch information and an estimated value calculated from pitch information related to pitch motion of the vehicle due to an operation of a driver of the vehicle.

3. The whoops-road determination device according to claim 2, wherein the acquisition unit calculates the estimated value by using a vehicle model defined by an equation of motion representing motion of the vehicle.

4. The whoops-road determination device according to claim 3, wherein the estimated value is calculated from pitch information related to the pitch motion of the vehicle calculated based on an output signal from an acceleration sensor mounted on the vehicle.

5. The whoops-road determination device as described in any of claims 1 to 4, further comprising a control unit configured to adjust a damping force of the vehicle when the traveling road is determined as being the whoops-road.

6. The whoops-road determination device according to claim 5, wherein
a sensor, configured to output a signal, with which the acquisition unit calculates a velocity of the rebound motion and a velocity of the compression motion of a front part and a rear part of the vehicle, and a suspension are mounted on the vehicle, and the control unit adjusts a damping force of the suspension to lower the rear part of a vehicle body, based on an output signal from the sensor in accordance with the velocity of the rebound motion and the velocity of the compression motion when the traveling road is determined as being the whoops-road, and/or
the control unit performs at least one of increasing the damping force of the compression motion of the front part or reducing the damping force of the rebound motion of the front part and reducing the damping force of the compression motion of the rear part or increasing the damping force of the rebound motion of the rear part, when the traveling road is determined as being the whoops-road.

7. The whoops-road determination device as described in any of claims 5 to 6, wherein, when the traveling road is determined as being the whoops-road, the control unit increases or reduces the damping force of the vehicle as compared with a normal case in which the traveling road is not determined as being the whoops-road.

8. The whoops-road determination device as described in any of claims 1 to 4, further comprising a control unit configured to adjust a height of the vehicle when the traveling road is determined as being the whoops-road.

9. The whoops-road determination device according to claim 8, wherein the control unit performs at least one of raising the height of the front part of the vehicle and lowering the height of the rear part of the vehicle, when the traveling road is determined as being the whoops-road.

10. The whoops-road determination device as described in any of claims 1 to 9, further comprising a timer unit conf igured to start time counting at a time at which the first value calculated based on the pitch information crosses the first threshold downward, and then end the time counting and reset a counted time obtained by the time counting at a time at which, after the first value exceeds the first threshold, the first value crosses a second threshold greater than the first threshold upward or configured to start time counting at a time at which the first value crosses the second threshold upward, and then end the time counting and reset a counted time obtained by the time counting at a time at which, after the first value falls below the second threshold, the first value crosses the first threshold downward.

11. The whoops-road determination device according to claim 10, wherein the second value is a probability value indicating a probability that the traveling road is the whoops-road, and the probability value is set to decrease as the counted time increases.

12. The whoops-road determination device according to claim 11, wherein
the probability value is set to be a negative value as the counted time increases, and the accumulation value decreases when the probability value being the negative value is accumulated to the accumulation value, and/or
the probability value decreases as the counted time increases so as to make the accumulation value adjustable.

13. The whoops-road determination device as described in any of claims 1 to 12, wherein the accumulation value is modified when front wheels and rear wheels of the vehicle leave contact with the traveling road.

14. The whoops-road determination device as described in any of claims 1 to 13, wherein the pitch information is a pitch angular velocity of the vehicle, and the pitch angular velocity is acquired based on an output signal output from at least one of an inertial measurement unit, a stroke sensor, and at least one of acceleration sensors.

15. A vehicle control method comprising:
an acquisition step of acquiring a first value corresponding to pitch information related to pitch motion in a vehicle based on an output signal from a sensor mounted on the vehicle;
a calculation step of calculating a second value serving as a basis for determination whether a traveling road of the vehicle is a whoops-road from a time at which the first value crosses a first threshold;
an accumulation step of accumulating the second value as an accumulation value with passage of time;
a determination step of determining whether the traveling road is the whoops-road based on the accumulation value; and
a control step of adjusting a damping force of a suspension of the vehicle.
